(19) **Europäisches Patentamt**

**European Patent Office**

**Office européen des brevets**

(11) **EP 0 769 886 B1**

(12) **EUROPEAN PATENT SPECIFICATION**

(45) Date of publication and mention
of the grant of the patent:
**14.12.2005 Bulletin 2005/50**

(51) Int Cl.⁷: **H04Q 11/06**

(21) Application number: **96116278.1**

(22) Date of filing: **11.10.1996**

(54) **PCM signal switching system employing an integrated and programmable matrix**

Vermittlungssystem für PCM-Signale mit einer integrierten und programmierbaren Matrix

Système de commutation de signaux MIC utilisant une matrice intégrée et programmable

(84) Designated Contracting States:
**DE FR NL SE**

(30) Priority: **20.10.1995 IT MI952160**

(43) Date of publication of application:
**23.04.1997 Bulletin 1997/17**

(73) Proprietor: **Italtel S.p.a.**
**20154 Milano (IT)**

(72) Inventors:
• **Maranini, Odo**
**20127 Milano (IT)**
• **Beccari, Marco**
**20090 Buccinasco (MI) (IT)**

(74) Representative: **Capasso, Olga et al**
**de Simone & Partners SpA**
**Via V.Bellini 20**
**00198 Roma (IT)**

(56) References cited:
FR-A- 2 677 201     US-A- 4 547 877
US-A- 4 718 058     US-A- 5 343 467

• TOKUNAGA M: "ADVANCED MULTIMEDIA TIME-DIVISION MULTIPLEXER" JAPAN TELECOMMUNICATION REVIEW,JP,TELECOMMUNICATIONS ASSOCIATION., vol. 30, no. 3, 1 July 1988 (1988-07-01), page 42-50 XP000004694 TOKYO, JAPAN

**Description**

Field of the Invention

The present invention relates to a PCM (Pulse Code Modulation) switching system and particularly to a PCM switching matrix, integrated and structured in order that the bit-rate of each input and/or output flow can be separately programmed.

The switching function of incoming PCM channels on outgoing PCM channels is made through connection networks of the commercial type in the modern digital switching telephone exchanges.

To the purposes of network expansions and for cost-saving reasons, special integrated circuits have been developed employing the fundamental functions of PCM switching, each one with a givenswitching capacity, which can be associated between them according to a modularity principle and connected according to methods which are well known by the skilled man in the art, to implement a switching network having the desired capacity.

Each integrated device or PCM switching matrix is generally supplied with a set of serial to parallel converters for a given number of incoming flows, each flow being divided (in terms of time) into a plurality of channels, through which coded voice signals or data are transmitted. A signal or data memory enables to store the digital samples of the different incoming channels.

A second memory (command memory) stores the different current connection commands of an outgoing channels at a given incoming channel, acting in practice as pointing element of data reading addresses stored in the data memory for each outgoing channel. A set of parallel to serial converters generates the relevant outgoing serial flows. A control and timing logic circuit governs the different circuit blocks of the elementary matrix under the control of a microprocessor supervising the switching process of the whole network.

Background Art

Integrated elementary matrixes are described in the European patent No. EP 39948 of 13th May 1980, in the name of CSELT- Centro Studi e Laboratori Telecomunicazioni s.p.a: and in the European patent.No. EP 89683 of 24th March 1982, in the name of CSELT- Centro Studi e Laboratori Telecomunicazioni s.p.a.

US-A-4,543,653 discloses a modular self-routing PCM switching network including means for cyclically checking the correctness of the established connections in a continuous manner.

Devices already known show important restrictions and disadvantages.

Notwithstanding each elementary switching matrix can manage a given number of input and output flows and can operate in a given range of symbol frequencies of data flows, they cannot manage input and output flows at symbol frequencies, independly different between them.

This aspect and peculiarity of the known devices is a constraint for some optimization opportunities of switching networks or their suitability to receive non homogeneous signals and in particular to receive flows operating at differentiate bit-rate among the different flows received.

Said matrixes of the known type show also the following disadvantages.

If flows of data they receive at input are not time aligned, they require the presence of elastic memories of large dimensions

They do not allow switching with a unique instruction of a whole data flow.

They do not enable the simultaneous synchronisation of several remote receivers.

The patent US 5,343,467 in the name of Alcatel N.V. discloses a switching element having inputs and outputs which are separately switchable between two bit rates. Higher bit rates are therefore used only when needed and consequently a reduction of power dissipation and spurious radiation is achieved.

Scope of the invention

Scope of this invention is therefore to overcome the disadvantages and restrictions of known devices and to implement a system and relevant elementary PCM switching matrixes offering also important advantages versus the know devices, as it shall be highlighted in the following description.

Basically, the PCM switching system implemented according to the invention is characterized in that each elementary switching matrix can be configured through programming in order to control input and output flows at symbol frequency to be separately preset, in a way completely independent from the symbol frequency of the other flows. This possibility to program the symbol frequency of the different incoming and outgoing flows (which can be selected among a given number of frequencies, generally multiple or submultiple of a basic frequency supplied by means outside the switching network), gives the switching network a great adaptation flexibility at different operation conditions, mainly tied to the different bit-rate of data transiting on junction lines abutted to the subject connection network. It has important effects on cost-saving.

Just for example sake, we mention one of the possibilities offered by the matrix according to the invention, which enables to implement not only switching matrixes for 64 Kbit/s channels, but also 16 Kbit/s sub-rate switching channels (Full-Rate typical user in GSM standard mobile networks) and 8 Kbit/s ones (Half-Rate GSM standard) as it shall be more evident from the following description.

The maximum number of output channels remains defined by technological parameters of RAMs employed, that is by the average reading time, in relation with the 125 μs frame period. At present this limits at 4,096 the maximum number of readings which can be made in 125 μs, and therefore of output channels, for each elementary switching matrix. In practice the command RAM memory must not exceed the size of 4,096 cells. Consequently, 8 flows max. could be obtained if all the flows were programmed for a bit-rate, for instance of 32Mbit/s. In general, it can be stated that within these technological restrictions, output channels can be grouped in a given number of outgoing serial flows, each one programmable for a given bit-rate according to the features of the hardware downstream the switching network.

The number of incoming channels can be higher than the number of outgoing ones, and in this case the switching matrix assumes the function of concentration element.

In fact, storing of incoming channels is made using several RAM blocks, byte organized, each of them capable to receive a predetermined number of channels and/or flows; increasing the number of RAMs, the total number of incoming channels increases too.

Considering the use of one 1 K RAM memory for each block reasonable, the maximum number of flows incoming in each block, for instance at 32 Mbit/s bit-rate, cannot be higher than 2. Decreasing the bit-rate of flows, their number can increase.

Irrespective of the organization of the grouping in input serial flows of incoming channels, these last shall not necessarily result aligned to the local synchronization signal but channels of the same order number can result phase shifted among them in the different input flows. This avoids the need to resynchronize the switching matrix any time some hardware parameters are modified, such as for instance the length of connection cables, etc..

The writing in sequence of a given RAM memory block of data coming from different serial input flows and converted to parallel by the relevant serialparallel converter on the writing bus, is made introducing a time shifting of a clock period among the different input serial flows through bistable circuits, inserted in a gradually increased number for the different flows in series to an input sampling bistable circuit controlled by the front of the relevant clock signal of the particular line or input flow. Bistable stages, duly added in a number gradually increased in cascade to sampling input flip-flops, introduce a time delay for gradual increases of a clock period in the different input flows concerning a given block of RAM memory. This, together with the recognition of the line synchronisation by an appropriate pointing counter of the memory address relevant to a given channel of the input serial flow, enables the writing in sequence of the memory data without requiring the use of writing buffers (elastic memories) in a number equal to that of input serial flows. Of course, writing *strobes* are generated according to the bit-rate programmed for each input flow, every eight bits and their time position remains firmly bound for each flow.

Disclosure of Invention

The invention provides a PCM switching elementary matrix for a number N of input flows, each one containing a number K of channels and a number M of output flows containing a number H of channels, including serial/parallel conversion means for each one of said N input flows, at least one first RAM memory (*speech memory*) suitable to store, in a same number of addressable portions of the same, numeric samples of the different channels of said input flows, at least one second RAM memory (*command memory)*, suitable to store the connection combinations between said pluralities of channels incoming and outgoing as pointing addresses of the relevant data stored in said first RAM memory, serial/parallel conversion means for each one of said output flows, a control logic circuit for said connections, an interface circuit with microprocessor for connection control,

receipt and timing distribution means, suitable to receive an external synchronization signal and a clock signal and to generate a plurality of enabling signals having different frequency, obtained from said external clock signal, an internal synchronization signal and a plurality of timing signals consistent with the *bit-rate* of input and output flows different between them and selectable through programming;

a first plurality of double addressable port RAM memory blocks, for reading and writing, respectively, forming said first memory (*speech-memory*), each RAM memory block being destined to store input data relevant to a given fractional number of said plurality of said N input flows;

a first selection device for each flow suitable to receive at input said plurality of enabling signals having different frequency and to make available on two separate outputs a first clock enabling sequence and a second byte enabling sequence in response to a selection signal emitted by said interface circuit with the microprocessor;

a serial/parallel converter for each flow, suitable to store data transiting on said flow at the rate defined by said first clock enabling sequence and to produce parallel data on a writing bus of data in the relevant addressable portions of the relevant memory block *(speech memory)*;

a programmable counter for each flow suitable to receive at input a relevant line synchronization signal and to govern said writing port to define the writing address in the relevant memory block of the concerned channel of the information put into the writing bus by the relevant serial/parallel converter in response to the receipt of a pulse of said second byte enabling sequence;

timing and enabling logic means, suitable to manage and control the writing of input data in memory addresses (*speech memory)* of the relevant input channels, according to the *bit-rate* of the relevant input flows;

synchronization means using the above mentioned synchronization internal signal for generating two time marks, defining a period not shorter than that of the duration of a frame of PCM signals;

insertion means of the time marks in one or more bits of a first time slot corresponding to the first channel coming out from the relative output serial flow.

Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:

**Figure 1** is a block diagram of an elementary programmable matrix, implemented according to the present invention;

**Figure 2** shows the BR_DT of Fig. 1 in detail;

**Figure 3** is a partial diagram of the BR_MFE unit of Fig. 1;

**Figures 4 and 5** show time diagrams of the storing process of data reaching the input of the BR_MFE unit implemented according to Fig. 3, considering that with the dotted line sloping rightward, or leftward respectively, we have indicated bit 8 of the last frame channel stored in the last bistable of the S/P register, or bit 0 of channel 0 stored in the first bistable of the S/P register, respectively.

**Figure 6** shows a diagram of any possible combination of number of flows and relevant bit-rates for the assumed embodiment example;

**Figure 7** is a partial diagram of the BP_GFU unit of Fig. 1;

**Figure 8** is a partial diagram of the writing/reading portion of the command memory foreseen in the BP_GFU unit of Fig. 1;

**Figures 9 and 10** show time diagrams of the BP_GFU unit in Fig. 1;

**Figure 11** shows a diagram of the BRSS unit in Fig. 1;

**Figure 12** shows in detail the BCC unit in Fig. 1;

**Figure 13** shows time diagrams of the control of one connection made by the BCC unit in Fig. 1;

**Figure 14** shows an embodiment of the BIM unit in Fig. 1;

**Figure 15** shows the timing of input and output flows of a switching matrix implemented according to the present invention;

Detailed description of a preferred embodiment of the Invention

As said above, the maximum number of input flows can be increased as desired, foreseeing the presence of a significant number of RAM memory blocks, for instance 1K addressing. From the studies conducted by the Applicant, it resulted that the use of six RAMs or RAM memory blocks having 1K addressing capacity for the storing of data at a max. bit-rate of 32 Mbit/s and therefore to set a maximum of 24 input flows and 24 output flows, was a reasonable project option. Therefore, data stored relevant to four input flows are stored in each block of RAM memory.

The external clock frequency applicable to the device can be 32 MHz, 16 MHz or 8 MHz. The value of the clock frequency applied to the device shall always be programmed at any reset.

The selection of the clock applied to the device determines a consequent availability of some given bit-rates, which can be assigned through programming to the different input and output flows. This correlation is also indicated in the following table where the relevant programming codes are also indicated.

| code and frequency of applied ck | | codes of link possible bit-rates | | | | | | |
|---|---|---|---|---|---|---|---|---|
| | | 32Mbit/s | 16Mbit/s | 8Mbit/s | 4Mbit/s | 2Mbit/s | 1Mbit/s | 0,5Mbit/s |
| 11 | 32MHz | 010 | 011 | 100 | 101 | 110 | not allowed | not allowed |
| 10 | 16MHz | not allowed | 011 | 100 | 101 | 110 | 010 | not allowed |
| 01 | 8MHz | not allowed | not allowed | 100 | 101 | 110 | 010 | 011 |
| 00 | xxxx | LINKS WHICH CANNOT BE USED | | | | | | |

The local synchronization signal (SYNC) must have a duration pulse equal to the period of the clock applied to the device and 8KHz frequency.

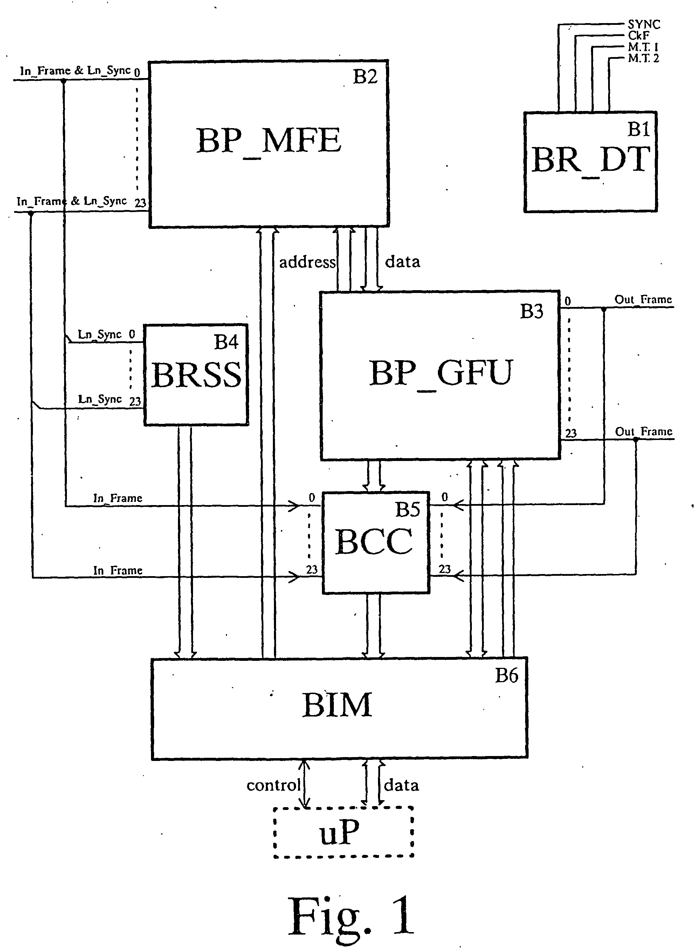

The elementary matrix essentially consists of six main functional blocks, shown in Fig. 1.

Receipt and Timing Distribution Block BR DT

This circuit block receives a clock signal CkF and an 8KHz synchronization signal SYNC from the outside, from which it obtains all timing signals for the different internal functional block of the elementary matrix. Preferably, the block can also receive two time marks from the outside M.T.1 and M.T.2 and, after synchronization of the same, they are sent during the next synchronization signal to the BP_GFU block to be inserted on all outgoing flows.

Block for Programming & Storing of Incoming Flows BP MFE

This block essentially contains the data memory, which according to the above mentioned preferred embodiment, consists of six RAMs or RAM blocks, 1K addressing each, forming the so-called *speech-memory* . The programming of the bit-rates relevant to two adjacent flows for a maximum of 12 total programming, in the example shown, is received by the Microprocessor Interface Block BIM, described hereafter more in detail. As it shall be stated in the description, in the case of the example shown, each programming of the 32Mbit/s bit-rate is permitted only for the first of the two adjacent flows. In practice only flows of pair order can treat 32 Mbit/s bit-rates since in this case the odd order ones are not used for lack of memory, being this one completely used by the pair flow (if it is programmed at the maximum bit-rate foreseen of 32 Mbit/s). Said block receives also PCM flows and relevant line synchronization signals In_Frame&Ln_Sync0, ...., In_Frame&Ln_Sync23 (Input Frame / Line Sync) required to preset the relevant channel counters, directly from the external pins of the device . The BP_MFE block transfers the content of cells pointed by the BP_GFU block through emission of addresses on the bus ADD, as data DATA to said BP_GFU block described below in detail.

Block for Programming & Storing of Outgoing Flows BP GFU

This block essentially contains the command memory (*command- memory*). It receives from the Microprocessor Interface Block BIM the programming of bit-rates relevant to two flows, for a maximum of 12 programming and the indication of connections to be made.

Since the maximum capacity of the command memory is 4,096 cells, considering the technological restrictions mentioned above, the higher is the number of flows programmed at the maximum bit-rate, the lower is the number of flows which can be controlled.

Block for Detection of Synchronization Phase Shifting BRSS

This block periodically measures the time phase shifting if line synchronizations Ln_Sync0, ..., LnSync23 (the relevant time position of channels having the same order number on the different flows) versus the local synchronization SYNC supplied by the BR_DT block. If a given phase shifting results changed compared to the previous scanning, communication is given to the microprocessor μP.

Connection Control Block BCC

According to a preferred embodiment, the invention includes also this block which continuously and periodically checks all the connections stored in the command memory and checks the correct transfer of data from the particular incoming channel In-Frame to the outgoing channel presently selected OutFrame.

If the comparison between input and output data is correct, the circuit restarts the check of the next connection; in the contrary instance it supplies the microprocessor μP with the information of the connection resulting not correct. Only after acquisition of data relevant to said information by the microprocessor, the circuit performs the check of other connections in sequence.

Microprocessor Interface Block BIM

This circuit block contains the control logics to dialogue with the different blocks mentioned above and can be directly connected to a commercial microprocessor μP, (for instance of the 68000 Motorola family) with data bus at 16 bits.

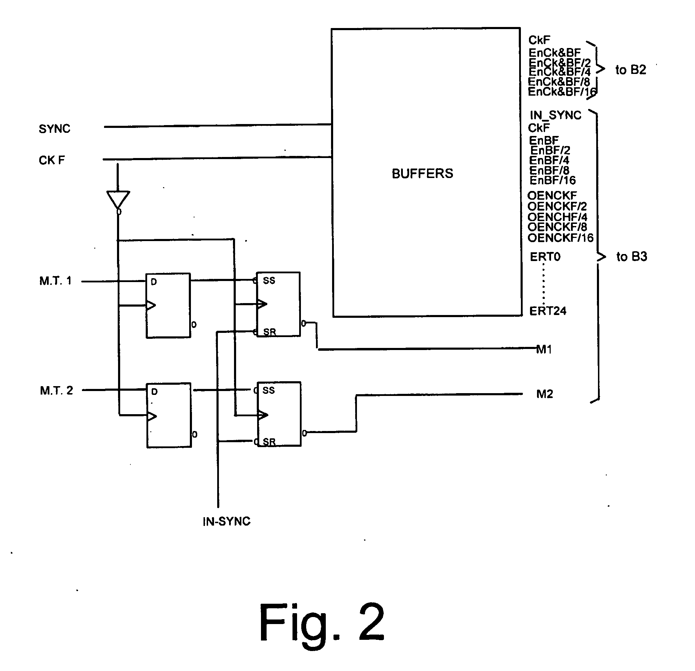

We shall now describe in detail the above mentioned units, starting from the BR_DT block, shown in detail in Fig. 2.

*BR_DT Block - Receipt and Timing distribution Block*

The 8KHz synchronization signal SYNC and a clock signal CkF whose frequency F can be for instance 32 MHz, 16 Mhz or 8 MHz, are received from the outside, as shown in figure 2.

The circuit generates and distributes the following timing signals:

-    CK and BYTE ENABLE for any programmable bit-rate of incoming flows of the BP_MFE block EnCk&BF1;
-    CK and BYTE ENABLE for any programmable bit-rate of outgoing flows from the BP_GFU block, EnBFx, OENCKFx, ERTx;
-    loading LOAD for the 24 Buffer registers relevant to a same number of output flows of the BP_GFU block;

As shown in the diagram, the BR_DT block can also receive, always from the outside, two time marks MT1 and MT2 (active at low level) with time not lower than μ and not matching the synchronization pulse. The presence of time marks is sampled by the clock and they are sent to the BP_GFU block where the synchronization signal inserts them in the fourth and fifth bit of the first time-slot TS0, corresponding to the first outgoing channels of the relevant output serial flow.

*BP MFE Block for Programming and Storing of Incoming Flows*

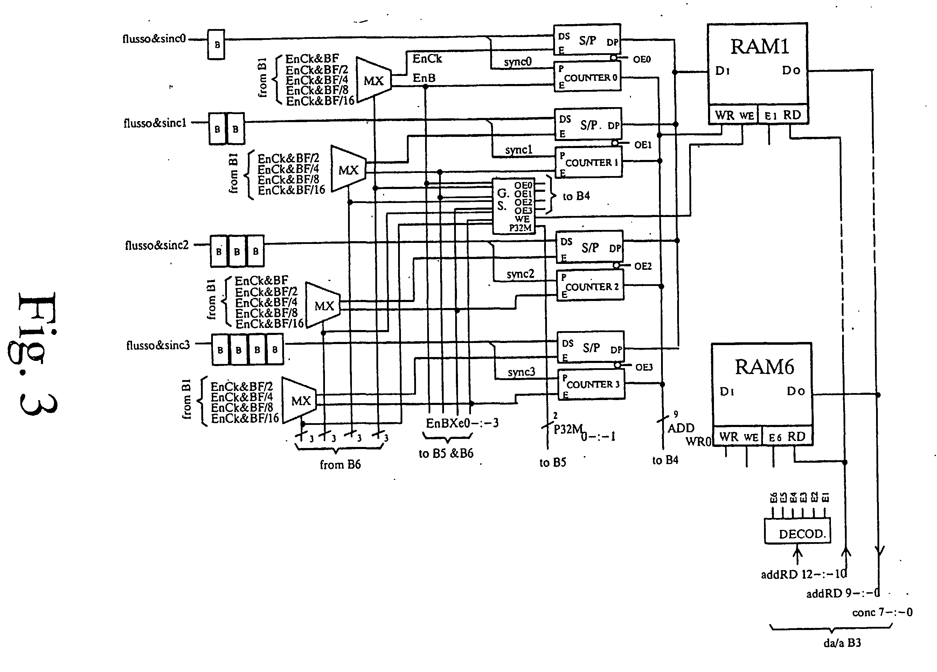

The architecture of this block is shown in detail in Fig. 3 for the first of the six 1Kbyte memory blocks RAM1, ..., RAM6 double addressble port, WR and RD respectively: the scheme being recurring for the six RAMs forming the *speech memory*.

Reading ports RD are controlled by the addRD address, periodically drawn by the command memory (*command memory*) of the BP_GFU block to which the information contained in the addressed cell shall be sent as described below.

The control circuit of WR writing ports manages four flows, incoming ones for the example considered having each one a given bit-rate which can be different from the other one. The bit-rate programming involves two adjacent flows at the same time. Concerning each pair of flows, if the first flow is programmed at the maximum bit rate of 32Mbit/s, the second flow is automatically inhibited to the writing of the RAM memory.

All the components, except for MX multiplexers, receive the relevant clock (CkxF) at programmed frequency, even if this is not always shown on the figures.

EnCkxx and EnBxx signals enable the component to operate coinciding with the relevant clock front, for the bit time and for the byte time, respectively. Each serial/parallel converter (S/P) can consist of a register receiving on DS the serial flow and makes the channel available on the 8 bits parallel data bus DP.

Each counter (COUNTER) associated to each input line, gives the writing address of the channel to which the current information on the data bus DP belongs. Counters prepare for the use of their concerned RAM memory area according to the programmed bit-rate of the relevant input flow.

Multiplexers MX receive all timing signals required by the BR_DT block and selecting the requested timing according to the programming received by the BIM block.

Signals EnBXe0=-:3, selected to enable the relevant channel counters (COUNTER), preset by the line synchronisation (syncX), are sent also:

-    to the BIM block, where a centralized circuit employs the same to reconstruct the programming of the bit-rate to supply to the microprocessor when required by the same as acknowledgement of the programming made;
-    to the BCC block to implement the connection control with the appropriate timing;

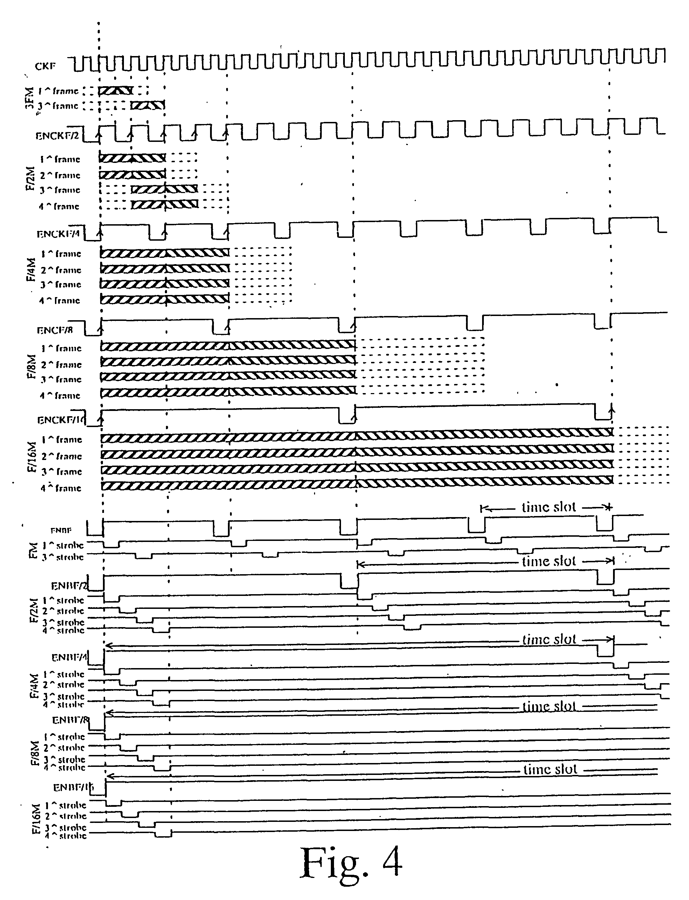

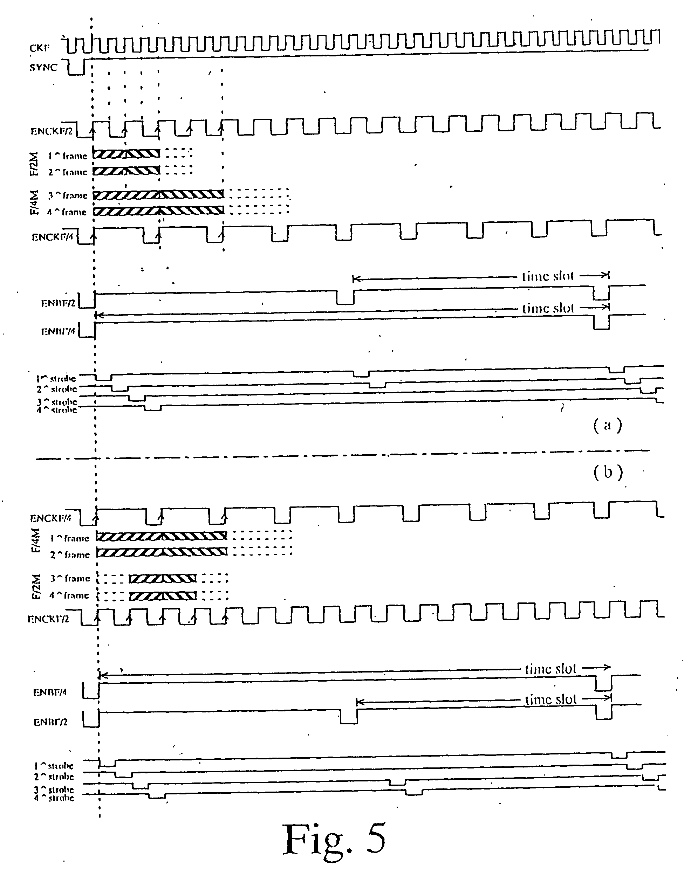

- to the *strobe* generation logic (G.S.) to generate writing enabling strobes in RAM with the relevant WE pulses (strobe of fig. 4 and 5). This logic locks the strobe OE1 if the bit-rate of the first programmed flow is 32Mbit/s and locks the strobe OE3 if the bit-rate of the third flow is 32Mbit/s, in order to disable a second flow of each pair having the first flow programmed at the maximum bit-rate of 32Mbit/s.

Bistable circuits B have the function to phase shift the incoming flows at the input of the relevant converters S/P in order that these last supply data on the parallel data bus DP, in different times to enable their writing (necessarily in sequence) without requiring the use of elastic memories (writing buffers). Only the first input bistable circuit of each flow samples with the negated front of the relevant clock signal CkxF. Bistable circuits added in cascade and in gradually increased number to the first bistable sampling circuit have the scope to introduce a clock time delay on the second flow, of two clock periods on the third and of three clock periods on the fourth flow.

Timing diagrams of the block are shown in Figures 4 and 5. In Fig. 4 it is shown the case of four input flows reverting to the same RAM, each one programmed at a different bit-rate. In Fig. 5 it is shown the case where the first two flows (upper part of the figure) are programmed at 16Mbit/s bit rate and the second one at 8 Mbit/s, respectively while for the other pair of flows (lower part of the figure), the first flow is programmed at 8 Mbit/s while the second one at 16Mbit/s.

Diagrams of Fig. 5 show how writing strobes are generated, according to the programmed bit-rate. Strobes are generated every 8 bits and their time position remains rigidly bound for each flow.

## BP_GFU BLOCK - Block for Programming and Control of Outgoing Flows

For the generation of outgoing flows, this block avails of a (*command-memory*) having a capacity of 4Kword, 16 bits, which is implemented with eight 0,5Kword RAMs.

Also these eight RAMs avail of double port, a reading only port RD and a writing and reading port WR/RD microprocessor controlled through the BIM interface block.

The reading port RD of each RAM memory block is addressed by the SFU output phase scanning (or channel) circuit which is constantly increased with the clock signal in order to address the cells of the *speech-memory* within a time of 125μs of frame.

The content of addressed cells of the *speech-memory* can be transmitted in any time-slot (T.S.) of one of the 24 output flows foreseen (as maximum number) in the example described.

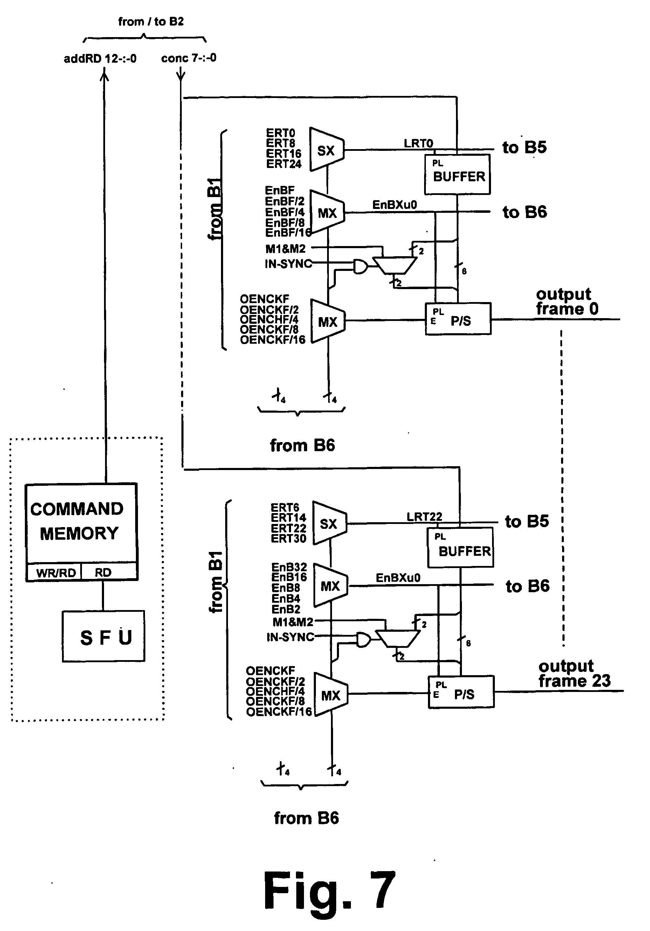

Actually, each output flow avails of a circuit identical to that shown in Fig. 7.

For a correct understanding of the circuit, we point out that:

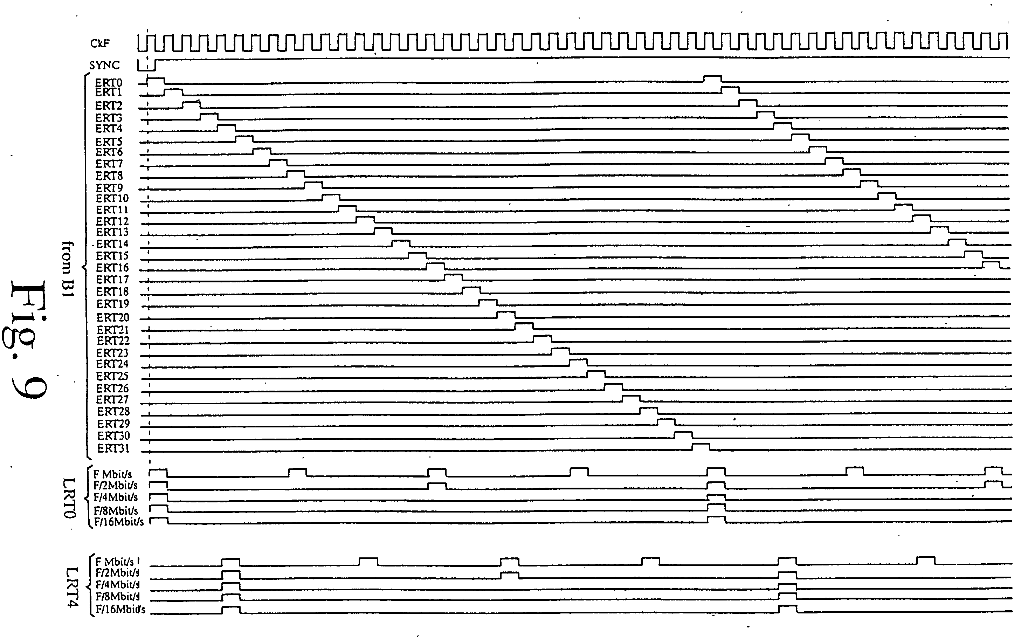

- all the components, except for SX selectors and MX multiplexers, receive the relevant programmed clock signal CkxF, even if not indicated in the diagram of the figure;
- SX is a selector suitable to form the LRTx signal, employing one or more signals available at input, according to the programmed bit-rate.
- each buffer register RT associated to a given outgoing flow, receives an enabling signal LRTx to store the datum present on bus conc7-:-0, as shown in Fig. 9, where LRT0 and LRT4 are highlighted according to the programmed bit-rate;
- each parallel/serial converter P/S consists of a register suitable to store the parallel datum coming from the buffer register and serialize it at output according to the programmed bit-rate;
- the programming of the bit-rate of each output flow, coming from the BIM block, contains also a bit to enable the insertion in the time-slot (channel) zero (TS0) of the above mentioned two time marks M1 and M2.

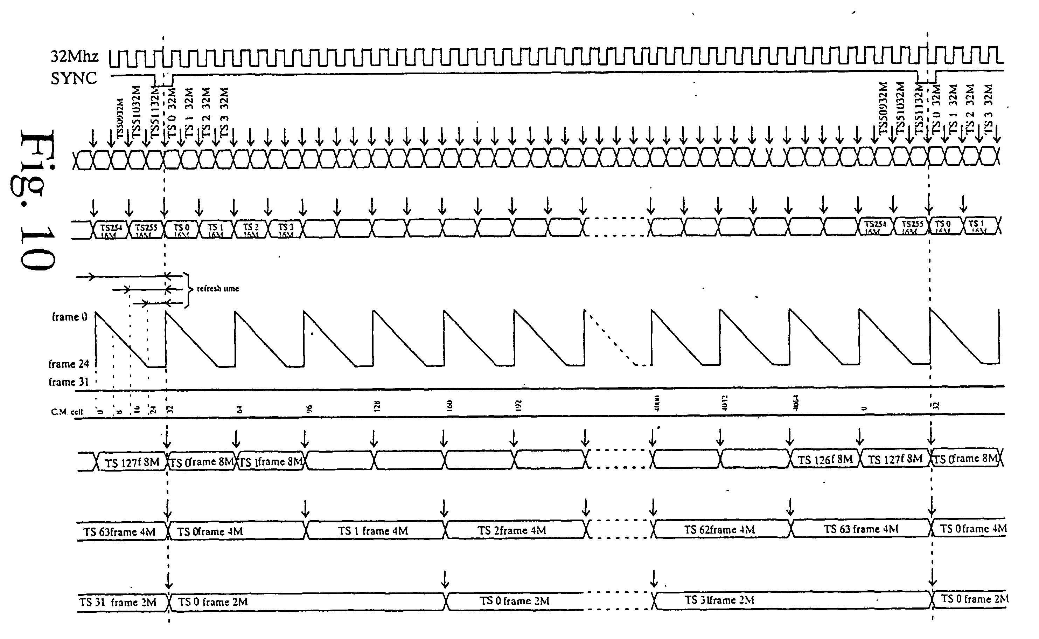

Making reference to time diagrams in Fig. 10, assume that all outgoing flows are programmed at 8 Mbit/s bit-rate (this condition is represented in the central highlighted area of Fig. 10) During the updating of buffer registers, all the 24 registers are loaded each with the content of its channel to transfer. At any byte time (indicated with arrows downward) all P/S registers are simultaneously loaded so that the corresponding channels of the different flows are all transmitted at the same time.

The central band of Fig. 10 indicates the address of the *command-memory* cells by the scanner of outgoing phases SFU pre-set at 32 by the SYNC signal.

Observing the relation existing between the addressing of cells and data transmission through output flows, we can notice that the address of the incoming channel to be transferred to the outgoing channel or time-slot (TS) is contained in different cells, depending on the programmed *bit-rate*.

More in particular, in the example shown, the addresses of channels to transfer in time slots TS1 shall be in cells 32-:-55 for 8 Mbit/s flows, in 64-:-87 cells for 4 Mbit/s flows and in 128-:-151 cells for 2 Mbit/s flows.

If bit-rates higher than 8Mbit/s are programmed, being 4,096 the cells available in the *command-memory* the updating time of buffer registers (whose useful number decreases) is reduced and of course also the number of flows which can be employed.

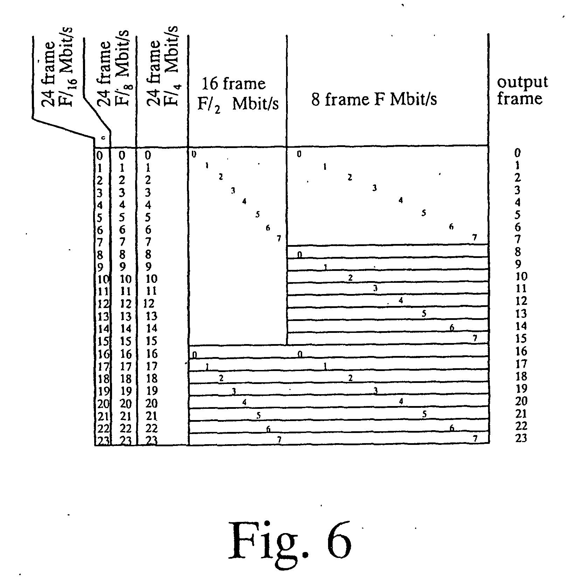

The table shown in Fig. 6 briefly highlights the number of flows which can be employed according to the programmed bit-rate and flows repeated among them.

In other words said table aims at highlighting that, in the frame time of 125µs, assuming as above that the number of cells of the command memory totals to 4096 cells, the content of 4096 channels is available at output in said frame time to control No. 8 flows at speed F. If flows are 16, the content of the same quantity of cells is available at output at a lower speed equal to F/2.

To identify the *command-memory* cell where the address of the incoming channel to be drawn by the *speech-memory* has to be written we can apply the following formula:

$$\text{ADD}_{\text{cella}} \, (F\&CO) = \frac{8F}{C} \, . \, C + f$$

where: F is the frequency of the clock used expressed in Mhz, B is the bit-rate of the outgoing flow, C is the number of outgoing channels and f is the number of outgoing flows.

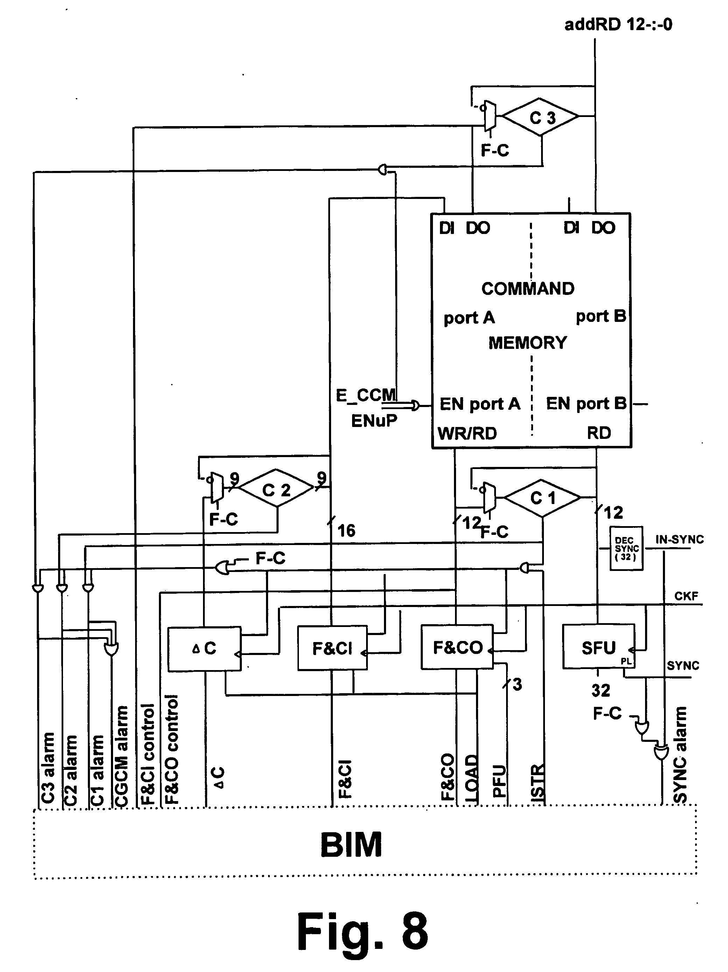

The control diagram of the *command-memory* is shown in fig. 8.

The SFU block (Outgoing Phases Scanner) can be implemented on a 12 $\text{bit}_{\text{MAX}}$ counter suitable to continuously read in sequence the relevant cells of the *command-memory* to form the different PCM flows outgoing from the switching elementary matrix. The counter can be preset by the synchronization signal 8khz SYNC8k at value 32, while the progress clock signal is the external clock signal applied at the CkF device. The IN_SYNC signal is an internal regenerated synchronization signal.

The F&CO block implements a 12 $\text{bit}_{\text{MAX}}$ register/counter, where the interface block with the microprocessor writes the address of the cell to be written in the command memory, coinciding also with the Flow&Output Channel. If it is the case of an I.C.A. instruction (Adjacent Channel Instruction) then the interface block enables also a 3 bit code (PFU) to indicate the bit-rate of the concerned output flow, in such a way that the F&CO block becomes a counter which at any clock pulse increases by 8, 16, 32, 64 or 128 if the programmed bit-rate is F, F/2, F/4, F/8 or F/16 Mbit/s, respectively.

The F&CI block implements a 16/9 bit register/counter (no.16 bits when operating as register and no.9 bits when operating as counter), where the interface deposits the information to be written in the cell identified by F&CO. If it is the case of an I.C.A. instruction then the F&CI block becomes a counter in order to increases the number of input channel to be switched.

$\Delta$C is a counter where the interface loads the number of concerned channels, in case of I.C.A. instruction only. This counter, generally locked on pace 0 keeps the counter function of F&CO and F&CI blocks locked. The interface loads all the three blocks at the same time ($\Delta$C, F&CO and F&CI) and if the $\Delta$C block is loaded at a value different from 0, then F&CO and F&CI blocks progress while $\Delta$C goes back up to return on pace 0.

When no instruction involving the *command-memory* is required, C1 and C2 comparators control in real time the correct operation of SFU with F&CO and of F&CI with $\Delta$C, respectively.

When said blocks are used to execute an instruction, the ISTR signal locks the counters which are loaded with the LOAD signal at the desired value and the consequent alarms of comparators C1, C2 and C3. After the writing of the *command-memory*, the ISTR signal is newly enabled, $\Delta$C and D&CI blocks are reset and only when SFU reaches the same pace of F&CO, C1 and C2 alarms shall be newly enabled.

The comparator C3 is used to control the drivers of the *command-memory* To limit the component dissipation, drivers of port A are enabled by the E_CCM signal enabled by appropriate cyclic test.

The F-C signal imposes complemented data at input of comparators in order to have the possibility to check the effectiveness.

For the control of the *command-memory* cells, it can be foreseen that a cyclic test can enable, even in on-line operation, a check made through the BIST devices implemented for the checks generally made in the acceptance phase (*incoming*).

### BRSS BLOCK - Synchronization Phase Shifting Detection Block

As already mentioned in the general description, this block performs phase shifting measurements (expressed in T.S.) between line synchronization syncX belonging to the different flows and the local synchronization IN_SYNC on which the whole operation of the implemented matrix is based.

In practice, for each programmed incoming flow, the address of the channel stored in the S.M. is supplied coinciding with the local synchronization IN_SYNC.

This function enables to determine which connection has to be made to obtain the lower (or higher) switching delay.

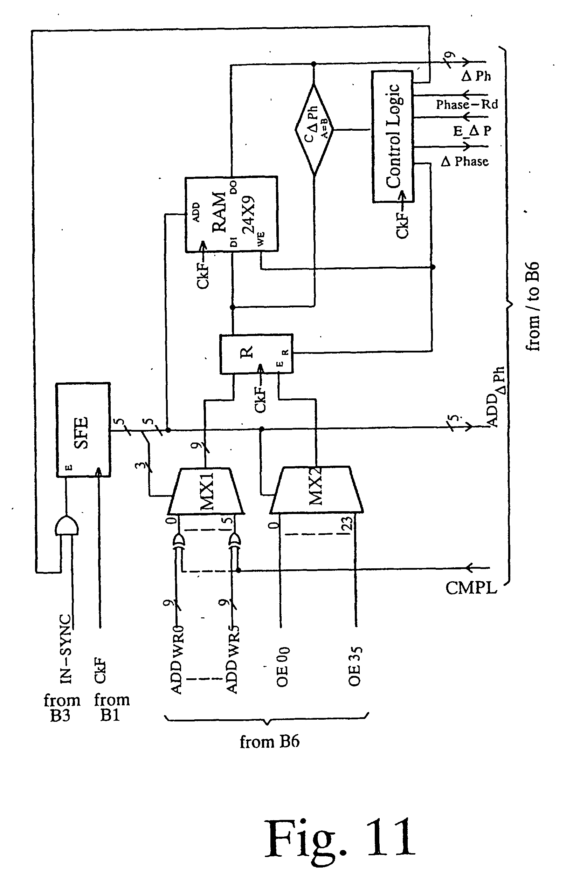

Making reference to Fig. 11, this block includes:

- a Scanner of incoming Flows SFE selecting the content of one of the 24 channel counters (COUNTER) present in the BP_MFE block (ADD$_{WRx}$ & OE$_{Xy}$) through multiplexers MX1 and MX2;
- a register R storing the content of the counter selected by the scanner;
- a 24x9 RAM (reset at power-on) containing the previous content of the 24 channel counters, showing at output the last reading of the counter selected by the scanner;
- a comparator C, comparing the pace of the counter just stored in the register R with the previous detection contained in the relevant memory cell;
- a control logic which, according to the result of the comparison made by the comparator, enables (if A=B) the progress of the scanner to select and analyze the next counter; in the contrary instance it keeps the scanner locked, updates the RAM with the new counter value, resets the register R and informs the controller (through ΔPhase signal) that a variation in the phase shift of a line synchronization (syncX) versus the local synchronization IN_SYNC has been detected.

The μP can now read the status of the scanner and the RAM output to store to which flow the phase shifting detected refers.

Afterwards, the μP shall communicate to have acquired data, enabling the Phase-Rd signal, necessary to the control logic to remove the lock from the scanner, which at the next local synchronization, shall point the selection of the subsequent flow counter.

The microprocessor can operate on this circuit through two commands:

1) the E_ΔP signal to enable the whole circuit (disabled at power-on)
2) the CMPL signal to complement the addresses of channel counters in order to check the correct functionality of the whole circuit.

### BCC CLOCK- Connection Control Block

This block implements a circuit capable to check, *on line*, the actual execution of connections stored in the *command-memory* and the correct *bit-rate* of input flows used.

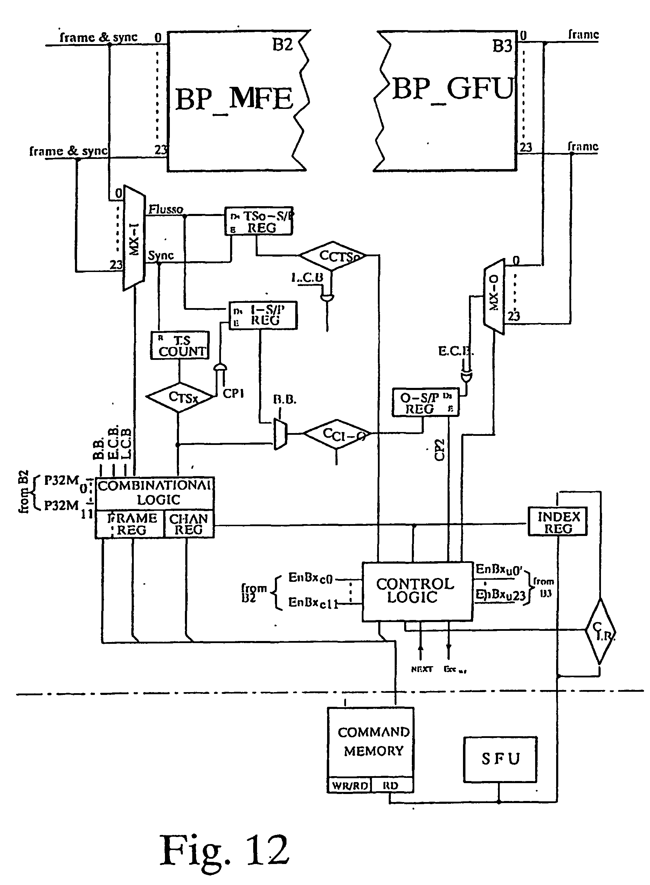

Referring to Fig. 12 we can notice that this control circuit is based on the content of the cells of the *command-memory* whose functionality is assured by the checks described above.

As shown in Fig. 12, each cell avails of three control bits, in addition to input channel and flow indications, namely:

- Busy-bit (B.B.) to establish the connection
- the Error Connection Bit (E.C.B.) to force a false condition of wrong connection
- the Link Control Bit (L.C.B.) to enable also the *bit-rate* control of the flow received during the normal control of a given connection.

When a given cell shows the *busy bit* B.B., the control logic stores the content of said cell in FRAME&CHANNEL registers and its address in the INDEX register. In consideration of P32M signals coming from each circuit of the block BP_MFE, the combinatory logic prepares MX-I to select:

- the flow
- the synchronization
- the relevant ck(bit) and Byte timing signals (not highlighted in the figure).

The line synchronization syncX thus selected causes the reset of the TS-COUNTER and the storing of the content of channel 0 in the Tso-S/P register (more in particular only the three less significant bits defining the *bit-rate* received are stored).

The control logic selects the enable-byte (EnBxe) relevant to the concerned flow and on this basis, it reconstructs the code of the *bit-rate* to compare with that stored in the Tso-S/P register through the CCTSo comparator.

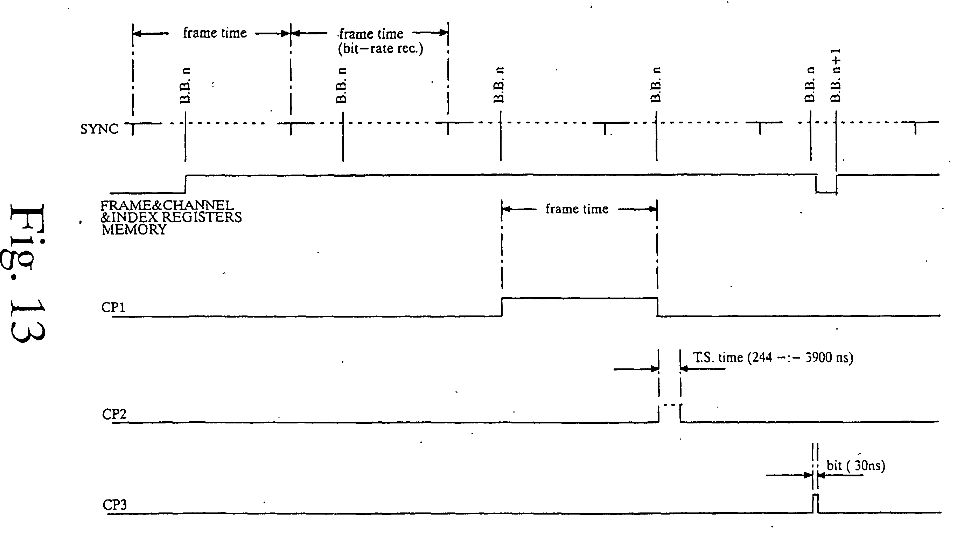

Two frames after the storing of the INDEX REGISTER, the comparator C.I.R. hastens the control logic to enable the CP1 signal, having 125μs duration as highlighted in the timing diagrams of Fig. 13, which enables the comparator C.TSX to identify the concerned channel and store it in the I-S/P REGISTER.

After additional 125μs (375 from storing of I.R.), the CP2 signal is enabled, equal to a T.S. as indicated in timing diagrams of Fig. 13, so to capture and store in O-S/P REGISTER the switched channel coming from the outgoing flow selected by MX-O controlled by the control logic.

The time of the CP2 signal is determined by the signal EnBxu 0-:-23 representing the outgoing *bit-rate* set.

At this point the control logic examines the status of comparators $C_{.Cl.O}$ and $C_{.CTSo}$ ; if their input result being equal, it waits for the third comparison of $C_{.I.R.}$ to enable the CP3 signal which resets the different internal circuits setting them for the re-examination of the possible presence of the B.B. in the next reading of the *command memory*; on the contrary if one at least is different, the alarm is enabled, supplying the BIM block with the information of the connection being tested, the relevant contents of the three S/P registers and the code of the reconstructed *bit-rate* of the control logic.

To check the effectiveness of the whole control, the E.C.B. bit is foreseen which can be activated by the control microprocessor when it wants and in the desired connection.

When active, it causes the storing in the O-S/P REGISTER of a byte completely reverse versus the one actually transmitted, causing the relevant expected alarms.

When a lining up of several elementary matrixes is realized on one or more lines/columns, to implement a switching matrix having larger size than that of the elementary matrix, the E.C.B. bit can be written on all the devices belonging to the same line or columns of the array.

This involves and answer from all the concerned devices. One device only (the one relevant to the connection) shall give wrong response with byte drawn at output negated versus the one drawn at input while all the other devices signal FF for the input and 00 for the output, performing a disconnection control.

Almost similar shall be the situation when in place of a connection a byte insertion has to be checked.

In this case the "in match" device (that is the one with the byte insertion) shall give wrong response with byte drawn at output and negated versus the byte inserted while all the other devices signal FF in place of the byte inserted and 00 at output.

*BIM BLOCK- Microprocessor Interface Block*

This block includes the signal control logic of the microprocessor, the register logic, the decoding of the operating code with relevant control and the state machine.

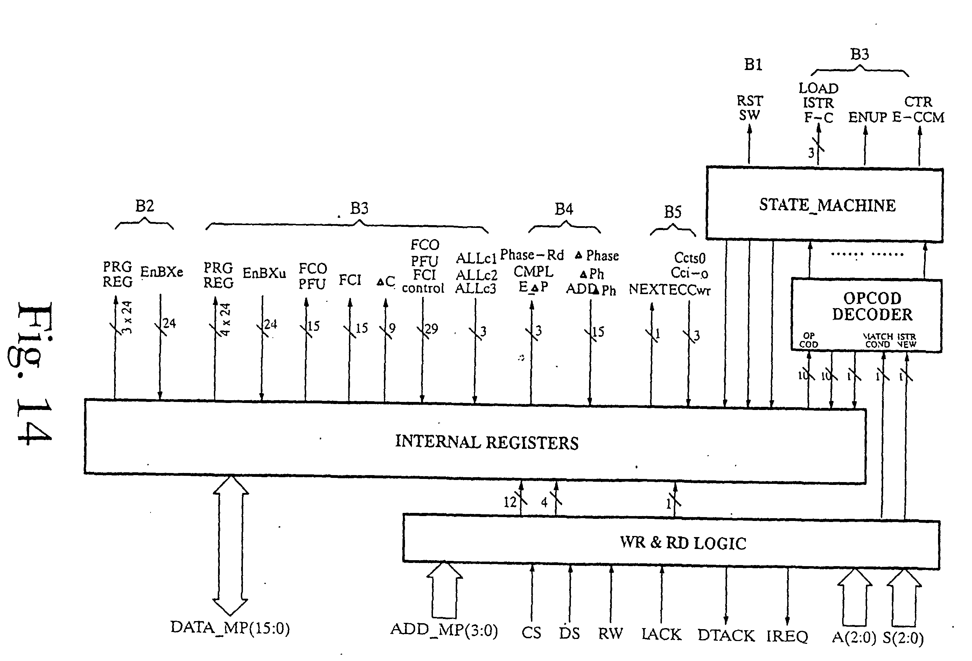

More in particular, referring to Fig. 14, this block includes:

- A writing and reading logic WR RD LOGIC which through control signals received (CS, DS, RW, JACK) and transmitted (DTACK, IREQ) dialogues with the control microprocessor according to defined specifications. Signals A and S are used to evaluate the match/no match condition, useful to adequately perform the operations requested by the μP

- Internal registers INTERNAL REGISTERS divided into reading/writing, only writing registers and reading registers.

- A decoder of the operating code of the instruction requested OPCOD DECODER checking the validity of the code stored and, if accepted, enabling the appropriate internal signals considering also the match/no match condition.

- A state machine STATE-MACHINE which is enabled at any instruction according to which it evolves in one of the following directions:

  a) RD & WR operations on the *command memory.*
  b) writing of programming registers
  c) reset control.

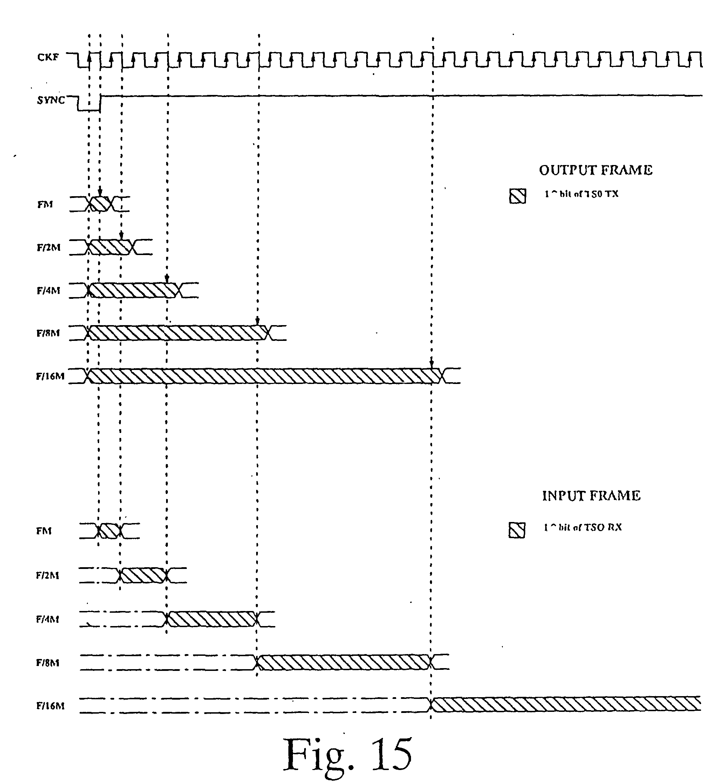

Fig. 15 shows a timing diagram of flows incoming and outgoing from an switching matrix of the invention.

As noticed in the realization example described above, each PCM integrated switching matrix allows, within some limits of the technological type only and which can be increased in new-generation devices, the control of input and output flows which can be programmed for different bit rates.

In addition to the scopes described above, this characteristic results particularly advantageous for GSM standard cellular telephone systems where, being two different operating rates foreseen (full-rate and half-rate) it is necessary to implement a switching system suitable to switch single bits instead of single bytes as it usually occurs.

Thanks to the above mentioned possibility to separately program the speed of input flows, in practice it is possible to supply a given input of the matrix with a flow showing a given speed (e.g. 2 Mbit/s) and destined to be switched bit by bit, programming switching operations of this flow as it showed a speed eight times higher (e.g. 16 Mbit/s). In this case the bit of the flow incoming at 2 Mbit/s is read eight times and considered as a 16 Kbit/s channel with eight bits equal among them.

Said channel, switched on an outgoing flow, it too programmed at 16 Mbit/s, is received as single bit of a 2 Mbit/s flow. In other words, due to the fact that the control microprocessor is programmed to determine switching operations at 16 Mbit/s speed while the data flow shows 2 Mbit/s speed, the switching matrix shall determine a switching of the single bits instead of the single bytes as it generally occurs.

Exploiting a line synchronization associated to each input flow, the matrix can manage flows not time aligned among them, without employing large elastic compensation memories.

The matrix of the invention enables to perform several connection/disconnection/insertion bytes on adjacent time slots, allowing to control the switching of a whole flow with a sole command.

The synchronization of several remote receivers is possible due to the fact that it is possible to insert time marks on all outgoing flows.

While a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

**Claims**

**1.** PCM elementary switching matrix for a number N of input flows (flusso&sinc0, flusso&sinc1, ...) each containing a number K of incoming PCM channels and a number M of output flows (output_frame_0, output_frame_1, ....) containing a number H of outgoing PCM channels, including

an incoming PCM channels block (BP_MFE) comprising serial/parallel conversion (S/P) means for each one of said N input flows, and at least a first random access memory, referred to as speech memory (RAM1,.., RAM6), for storing in a number of addressable portions of said speech memory, numeric samples of the different channels of said input flows,

an outgoing PCM channels block (BP_GFU) comprising at least a second RAM memory referred to as command memory (COMMAND_MEMORY), for storing the connection combinations between said pluralities of incoming and outgoing channels as pointing addresses of data stored in said speech memory (RAM1,.., RAM6), and parallel/serial conversion means (P/S) for each one of said output flows (output_frame_0, output_frame_1,....),

a control logic circuit (BCC) for checking the correctness of connections,

an interface circuit (BIM) for a microprocessor (uP) of connection control, external clock receipt and timing distribution means (BR_DT),

**characterized in that**

said speech memory consists of a plurality of memory blocks (RAM1,.., RAM6) each having double addressable ports for reading (RD) and for writing (WR), respectively, each memory block (RAM1,.., RAM6) being destined to store input data pertaining to a given fractional number of said plurality of N input flows,

said external clock receipt and timing distribution means (BR_DT) are suitable to receive an external synchronization signal (SYNC), an external clock signal (CKF) and a programmable pair of time marks (M.T.1, M.T. 2), defining an interval of time not shorter than that of the duration of a frame of PCM signals, and to generate an internally regenerated synchronization signal (IN-SYNC), a pair of internally synchronized time marks (M1, M2) obtained by sampling said external programmable time marks with said synchronization signal (SYNC), a first plurality of timing and byte-enable signals of different frequencies (EnCk&Bx), consistent with the bit-rates of said input flows derived from said external clock signal (CKF), and a second plurality of timing and byte-enable signals of different frequencies (EnBx, OENCKFx, ERTx), consistent with the bit-rates of said output flows derived from said external clock signal (CKF);

said incoming PCM channels block (8P_MFE) comprises

an input multiplexing device (MX) for each flow (flusso&sinc0, flusso&sinc1,...) that receives at input said first plurality of timing and byte-enable signals of different frequencies (EnCk&Bx) and makes available at two distinct outputs a clock enabling sequence (EnCkx) and a byte enabling sequence (EnBx) in response to a selection signal produced by said interface circuit (BIM);

a serial/parallel converter (S/P) for each input flow (flusso&sinc0, flusso&sinc1, ...), that stores data transiting on the respective flow at the rate defined by the selected clock enabling sequence (EnCkx) and produces parallel data on a writing bus (DP) for writing the data in the relevant addressable locations of the pertinent memory block (RAM1,.., RAM6) of said speech memory;

timing and enabling logic means (G.S.) that manage and control the writing of input data in memory addresses of said speech memory (RAM1,.., RAM6) of respective incoming PCM channels, according to the bit-rates of the respective input flows,

a programmable counter (COUNTER1, COUNTER2, ...) for each input flow (flusso&sinc0, flusso8sinc1, ...) that receives at an input a line synchronization signal (sync0, sync1,) of the respective input flow (flusso&sinc0, flusso&sinc1, ...) and controls the writing port (WR) of the memory block (RAM1,.., RAM6) of a respective incoming PCM channels defining the correct write address for the Information data placed on the writing bus (DP) by the respective serial/parallel converter (S/P), in response to a pulse of said byte-enable sequence (EnBx);

said outgoing PCM channels block (BP_GFU) comprises insertion means of said time marks (M1, M2) in one or more bits of a first time slot (TSO) corresponding to the first outgoing PCM channel of the relevant output serial flow.

2. The switching matrix according to claim 1, wherein each of said parallel/serial conversion means (P/S) for a respective output flow includes:

a buffer register (PL BUFFER) suitable to store the datum present on the read data bus of said speech memory (RAM1,.., RAM6);
a first selection device (SX) producing an enabling signal of said buffer register (PL BUFFER) according to a programmed bit rate;
a parallel/serial converter (P/S) coupled to the output of said buffer register (PL BUFFER);
a second selection device (MX) input with said timing signals (OENCKx) consistent with the bit rate of output flows and enabling the production of serialized data of the outgoing flow, at the selected speed.

3. The switching matrix according to claim 1, **characterized in that** incoming PCM channels block (BP_MFE) includes one or more bistable input sampling circuits (B) in cascade and in a number that is sequentially incremented for each input flow, for phase shifting said input serial flows among them and supplying a phase-shifted synchronization signal (SYNCx) to the respective programmable counter (COUNTERx).

4. The switching matrix according to claim 1, **characterized in that** to a reading port (RD) of said command memory (COMMAND_MEMORY) is associated a scanner for outgoing phases (SFU), consisting of a counter suitable to continuously read in sequence cells of the command memory to compose the different PCM channels output flows of the switching matrix, said counter being preset by said internal synchronization signal (IN-SYNC) and enabled to count on the basis of the bit-rate of said external clock (CKF).

5. The switching matrix according to claim 1, **characterized in that** to a write/read port (WR/RD) of said command memory (COMMAND_MEMORY) is coupled a circuit including:

a first register/counter (F&CO) in which the interface circuit (BIM) of the microprocessor (uP) writes the address of the location to be written in the command memory, the register/counter (F&CO) having an input receiving a code representing the bit-rate of a respective output flow and enabling the counter to function at a certain rate in function of said bit-rate;
a second register/counter (F&CI) in which the interface circuit of the microprocessor (BIM) writes the information to be written in the location identified by the information contained in said first register/counter (F&CO), such a second register/counter (F&CI) having an input receiving a certain instruction (ICA) for the switching of data flows on adjacent PCM channels, determining an increment of its content;
a counting circuit ($\Delta$C) in which said interface circuit (BIM), in presence of said instruction (ICA) loads the number of the PCM channels involved by said switching on adjacent channels, the presence of any number in said counting circuit causing a decrement of its content and an increment of the content of said first and second register/counters (F&CO; F&CI).

6. The switching matrix according to claim 1, **characterized in that** said connection control microprocessor (uP) is programmed to control switching operations of at least one of said flows at a speed which is an integer multiple of the bit-rate of the flow

7. The switching matrix according to claim 6, **characterized in that** said integer multiple is equal to 8.

8. A PCM switching system employing a plurality of elementary switching matrixes according to any one of the claims 1 to 7, controlled by a connection control microprocessor, each elementary matrix enabling the switching of any one of a number K of channels of any N input flows on any one of said H channels of any one of an elementary matrix output M flows under supervision of said connection control microprocessor, **characterized in that** the bit-rate of each one of said N input flows and of said output M flows can be separately and independently programmed.

**Patentansprüche**

1. Elementare PCM-Schaltmatrix für eine Anzahl N von Eingangsströmen (flusso&sinc0, flusso&sinc1, ...), die jeweils eine Anzahl K von eingehenden PCM-Kanälen und eine Anzahl M von Ausgangsströmen (output_frame_0, output_frame_1 ...), die eine Anzahl H von ausgehenden PCM-Kanälen aufweisen, enthalten, umfassend

   einen Block (BP_MFE) von eingehenden PCM-Kanälen, der ein Serien-Parallel-Umsetzungsmittel (S/P) für jeden der N Eingangsströme und mindestens einen ersten als Sprachenspeicher (RAM1,..,RAM6) bezeichneten Direktzugriffsspeicher zum Speichern von nummerischen Beispielen der verschiedenen Eingangsstromkanäle in einer Anzahl von adressierbaren Abschnitten des Sprachenspeichers umfasst,

   einen Block (PB_GFU)von ausgehenden PCM-Kanälen, der mindestens einen zweiten als Befehlsspeicher (COMMAND-MEMORY) bezeichneten RAM-Speicher zum Speichern der Verbindungskombinationen zwischen den Mehrzahlen von eingehenden und ausgehenden Kanälen als Zeigeradressen von im Sprachenspeicher (RAM1,.., RAM6) gespeicherten Daten und Parallel-Serien-Umsetzungsmittel (P/S) für jeden der Ausgangsströme (output_frame_0, output_frame_1 ...) umfasst,

   einen Steuerlogikschaltkreis (BCC) zum Prüfen der Richtigkeit der Verbindungen,

   einen Schnittstellenschaltkreis (BIM) für einen Verbindungssteuerungs-Mikroprozessor ($\mu$P),

   Mittel (BR_DT) für den Empfang der externen Taktfrequenz und die Timing-Verteilung,

   **dadurch gekennzeichnet, dass**

   der Sprachenspeicher aus einer Mehrzahl von Speicherblöcken (RAM1,..,RAM6) besteht, die jeweils doppelt adressierbare Ports zum Lesen (RD) bzw. Schreiben (WR) aufweisen, wobei jeder Speicherblock (RAM1,..,RAM6) zum Speichern von Eingangsdaten bestimmt ist, die sich auf eine gegebene Bruchzahl der Mehrzahl von N Eingangsströmen beziehen,

   die Mittel (BR_DT) für den Empfang der externen Taktfrequenz und die Timing-Verteilung geeignet sind zum:

   Empfang eines externen Synchronisierungssignals (SYNC), eines externen Taktsignals (CKF) und eines programmierbaren Paares von Zeitmarkierungen (M.T.1, M.T.2), die ein Zeitintervall, das nicht kürzer als die Dauer eines Frames von PCM-Signalen ist, definieren, und Erzeugen eines intern regenerierten Synchronisierungssignals (IN-SYNC), eines Paares von intern synchronisierten Zeitmarkierungen (M1, M2), die durch Stichprobennahme der externen programmierbaren Zeitmarkierungen mit dem synchronisierten Signal (SYNC) erhalten werden, einer ersten Mehrzahl von Timing- und Byte-Freigabe-Signalen verschiedener Frequenzen (ENCk&Bx), die den Bitraten der vom dem externen Taktsignal (CKF) abgeleiteten Eingangsströme entsprechen, und einer zweiten Mehrzahl von Timing-und Byte-Freigabe-Signalen verschiedener Frequenzen (EnBx, OENCKFx, ERTx), die den Bitraten der vom dem externen Taktsignal (CKF) abgeleiteten Ausgangsströme entsprechen;

   wobei der Block der eingehenden PCM-Kanäle (BP_MFE) umfasst:

   ein Eingangsmultiplexinggerät (MX) für jeden Strom (flusso&sinc0, flusso&sinc1, ...), das am Eingang eine erste Mehrzahl von Timing- und Byte-Freigabe-Signalen verschiedener Frequenzen (ENCk&Bx) empfängt und an zwei verschiedenen Ausgängen eine Taktfreigabe-Sequenz (EnClox) und eine Byte-Freigabe-Sequenz (EnBx) als Antwort auf ein vom Schnittstellenschaltkreis (BIM) erzeugtes Auswahlsignal zur Verfügung stellt;

   einen Serien-Parallel-Umsetzer (S/P) für jeden Eingangsstrom (flusso&sinc0, flusso&sinc1, ...), der auf dem jeweiligen Strom durchlaufende Daten mit einer von der ausgewählten Taktfreigabe-Sequenz (ENClox) definierten Geschwindigkeit speichert und parallele Daten auf einem Schreibbus (DP) zum Schreiben der Daten auf die relevanten adressierbaren Orte eines einschlägigen Speicherblocks (RAM1,..,RAM6) des Sprachenspeichers erzeugt;

   Timing- und Freigabelogikmittel (G.S.), die das Schreiben der Eingangsdaten in die Speicheradressen des Sprachenspeichers (RAM1,..,RAM6) der jeweiligen PCM-Eingangskanäle entsprechend den Bitraten der jeweiligen Eingangsströme verwalten und steuern,

   einen programmierbaren Zähler (COUNTER1; COUNTER2 ...) für jeden Eingangsstrom (flusso&sinc0, flusso&sinc1, ...), der an einem Eingang ein Leitungssynchronisierungssignal (sync0, sync1,) des jeweiligen Eingangsstroms (flusso&sinc0, flusso&sinc1, ...) empfängt und in Antwort auf einen Impuls der Byte-Freigabe-Sequenz (EnBx) den Schreibport (WR) des Speicherblocks (RAM1,...,RAM6) eines entsprechenden eingehenden PCM-Kanals steuert, der die korrekte Schreibadresse für die Informationsdaten definiert, die von dem entsprechenden Serien-Parallel-Umsetzer (S/P) auf den Schreibbus (DP) plaziert werden;

   wobei der Block der ausgehenden PCM-Kanäle (BP_GFU) Mittel zum Einfügen der Zeitmarkierungen (M1, M2) in ein oder mehrere Bits eines ersten Zeitschlitzes (TSO) entsprechend dem ersten ausgehenden PCM-Kanal des relevanten Ausgabe-Serienstroms umfasst.

2. Schaltmatrix nach Anspruch 1, wobei jedes der Parallel-Serien-Umsetzungsmittel (P/S) für einen entsprechenden Ausgangsstrom beinhaltet:

ein Pufferregister (PL BUFFER), das zum Speichern des Richtwerts geeignet ist, der auf dem Lesedatenbus des Sprachenspeichers (RAM1,..,RAM6) vorhanden ist;
ein erstes Auswahlgerät (SX), das ein Freigabesignal des Pufferregisters (PL BUFFER) gemäß einer programmierten Bitrate erzeugt;
einen Parallel-Serien-Umsetzer (P/S), der mit dem Ausgang des Pufferregisters (PL BUFFER) gekoppelt ist;
ein zweites Auswahlgerät (MX), an dem die Timing-Signale (OENCKx) eingegeben werden, die der Bitrate der Ausgangsströme entsprechen und die Erzeugung von seriell geordneten Daten des ausgehenden Stroms mit der ausgewählten Geschwindigkeit ermöglichen.

3. Schaltmatrix nach Anspruch 1, **dadurch gekennzeichnet, dass** der Block (BP_MFE) der eingehenden PCM-Kanäle einen oder mehrere bistabilen Stichproben-Schaltkreise (B) in Kaskade und in einer Anzahl enthält, die sequentiell für jeden Eingangsstrom zunimmt, um die seriellen Eingangsströme unter ihnen mit Bezug auf ihre Phase zu verschieben und ein phasenverschobenes Synchronisierungssignal (SYNCx) an den entsprechenden programmierbaren Zähler (COUNTER) zu liefern.

4. Schaltmatrix nach Anspruch 1, **dadurch gekennzeichnet, dass** mit einem Leseport (RD) des Befehlsspeichers (COMMAND_MEMORY) ein Scanner für ausgehende Phasen (SFU) verknüpft ist, der aus einem Zähler besteht, der kontinuierlich die Zellen des Befehlsspeichers nacheinander liest, um die verschiedenen PCM-Kanal-Ausgangsströme der Schaltmatrix zu erstellen, wobei der Zähler von dem internen Synchronisierungssignal (IN-SYNC) voreingestellt und zur Zählung auf der Basis der Bitrate der externen Taktfrequenz (CKF) aktiviert wird.

5. Schaltmatrix nach Anspruch 1, **dadurch gekennzeichnet, dass** an den Schreib-/Leseport (WR/RD) des Befehlsspeichers (COMMAND_MEMORY) ein Schaltkreis gekoppelt ist, umfassend:

einen ersten Register-Zähler (F&CO), in den der Schnittstellenschaltkreis (BIM) des Mikroprozessors (μP) die Adresse des in den Befehlsspeicher zu schreibenden Ortes schreibt, wobei der Register-Zähler (F&CO) einen Eingang aufweist, der einen Code empfängt, der die Bitrate eines jeweiligen Ausgangsstroms darstellt und dem Zähler ermöglicht, mit einer bestimmten Geschwindigkeit in Abhängigkeit der Bitrate zu funktionieren;
einen zweiten Register-Zähler (F&CI), in den der Schnittstellenschaltkreis (BIM) des Mikroprozessors die Information schreibt, die auf den Ort geschrieben werden soll, der durch die im ersten Register-Zähler (F&CO) enthaltene Information identifiziert wird, wobei der zweite Register-Zähler (F&CI) einen Eingang aufweist, der eine bestimmte Anweisung (ICA) zum Schalten von Datenströmen in angrenzenden PCM-Kanälen empfängt, die ein Inkrement seines Inhalts bestimmt;
einen Zählschaltkreis (ΔC), in den der Schnittstellenschaltkreis (BIM) bei Vorhandensein der Anweisung (ICA) die Anzahl der PCM-Kanäle lädt, die von dem Schalten auf angrenzenden Kanälen betroffen sind, wobei das Vorhandensein einer beliebigen Anzahl in dem Zählschaltkreis ein Dekrement seines Inhalts und ein Inkrement des Inhalts der ersten und zweiten Register-Zähler (F&CO; F&CI) verursacht.

6. Schaltmatrix nach Anspruch 1, **dadurch gekennzeichnet, dass** der Verbindungssteuerungs-Mikroprozessor (μP) programmiert ist, die Schaltoperationen von mindestens einem der Ströme mit einer Geschwindigkeit zu steuern, die das Vielfache einer Ganzzahl der Bitrate des Stroms ist.

7. Schaltmatrix nach Anspruch 6, **dadurch gekennzeichnet, dass** das Vielfache der Ganzzahl gleich acht ist.

8. Ein PCM-Schaltsystem, welches eine Mehrzahl von elementaren Schaltmatrixen nach einem der Ansprüche 1 bis 7 verwendet, die von einem Verbindungssteuerungs-Mikroprozessor gesteuert werden, wobei jede elementare Matrix das Schalten jeder beliebigen Anzahl K von Kanälen von irgendwelchen N Eingangsströmen auf jedem beliebigen H-Kanal von irgendwelchen M elementaren Matrix-Ausgangsströmen unter Aufsicht des Verbindungssteuerungs-Mikroprozessors ermöglicht, **dadurch gekennzeichnet, dass** die Bitrate jedes der N Eingangsströme und der M Ausgangsströme separat und unabhängig programmiert werden kann.

**Revendications**

1. Matrice de commutation élémentaire PCM (à modulation par impulsions et codage) pour un nombre N de flux d'entrée (flusso&sinc0, flusso&sinc1, ...) contenant chacun un nombre K de canaux PCM entrants et un nombre M de flux de sortie (output_frame_0, output_frame_1) contenant un nombre H de canaux PCM sortants, comprenant

   un bloc de canaux PCM entrants (BP_MFE) comprenant des moyens de conversion série/parallèle (S/P) pour chacun desdits N flux d'entrée, et au moins une première mémoire vive, désignée par mémoire vocale (RAM1, ..., RAM6), pour stocker dans un certain nombre de portions adressables de ladite mémoire vocale des échantillons numériques des différents canaux desdits flux d'entrée,

   un bloc de canaux PCM sortants (BP_GFU) comprenant au moins une deuxième mémoire RAM, désignée par mémoire de commande (COMMAND_MEMORY), pour stocker les combinaisons de connexions entre lesdites pluralités de canaux entrants et sortants au niveau d'adresses de pointage de données stockées dans ladite mémoire vocale (RAM1, ..., RAM6) et des moyens de conversion parallèle/série (P/S) pour chacun desdits flux de sortie (output_frame_0, output_frame_1, ...),

   un circuit logique de contrôle (BCC) pour la vérification de l'exactitude des connexions,

   un circuit d'interface (BIM) pour un microprocesseur (µP) de contrôle de connexion, des moyens de reçu d'horloge externe et de distribution de chronométrage (BR_DT),

   **caractérisée en ce que**

   ladite mémoire vocale est constituée d'une pluralité de blocs de mémoire (RAM1, ..., RAM6) possédant chacun des ports adressables doubles pour la lecture (RD) et l'écriture (WR), respectivement, de chaque bloc de mémoire (RAM1, ..., RAM6) qui est destiné à stocker des données d'entrée concernant un nombre fractionnel donné de ladite pluralité de N flux d'entrée,

   lesdits moyens de reçu d'horloge externe et de distribution de chronométrage (BR_DT) sont appropriés à recevoir un signal de synchronisation externe (SYNC), un signal d'horloge externe (CKF) et une paire programmable de marques temporelles (M.T.1, M.T.2), définissant un intervalle de temps qui n'est pas inférieur à celui de la durée d'une trame de signaux PCM, et à générer un signal de synchronisation régénéré de manière interne (IN-SYNC), une paire de marques temporelles synchronisées de manière interne (M1, M2) obtenues en échantillonnant lesdites marques temporelles programmables externes avec ledit signal de synchronisation (SYNC), une première pluralité de signaux de chronométrage et de validation d'octet (byte-enable en anglais) de différentes fréquences (EnCk&Bx) cohérents avec les débits binaires desdits flux d'entrée dérivés dudit signal d'horloge externe (CKF) et une deuxième pluralité de signaux de chronométrage et de validation d'octet (byte-enable en anglais) de différentes fréquences (EnBx, OENCKFx, ERTx) cohérents avec les débits binaires desdits flux de sortie dérivés dudit signal d'horloge externe (CKF) ;

   ledit bloc de canaux PCM entrants (BP_MFE) comprend un dispositif de multiplexage d'entrée (MX) pour chaque flux (flusso&sinc0, flusso&sincl, ...) qui reçoit en entrée ladite première pluralité de signaux de chronométrage et de validation d'octet (byte-enable en anglais) de différentes fréquences (EnCk&Bx) et rend disponible au niveau de deux sorties distinctes une séquence de validation d'horloge (EnCkx) et une séquence de validation d'octet (EnBx) en réponse à un signal de sélection produit par ledit circuit d'interface (BIM) ;

   un convertisseur série/parallèle (S/P) pour chaque flux d'entrée (flusso&sinc0, flusso&sincl, ...) qui stocke les données transitant sur le flux respectif à la vitesse définie par la séquence de validation d'horloge sélectionnée (EnCkx) et produit des données parallèles sur un bus d'écriture (DP) pour l'écriture des données dans les emplacements adressables pertinents du bloc de mémoire pertinent (RAM1, ..., RAM6) de ladite mémoire vocale ;

   des moyens logiques de chronométrage et de validation (G.S.) qui gèrent et contrôlent l'écriture de données d'entrée dans des adresses de mémoire de ladite mémoire vocale (RAM1, ..., RAM6) de canaux PCM entrants respectifs, en fonction des débits binaires des flux d'entrée respectifs,

   un compteur programmable (COUNTER1, COUNTER2, ...) pour chaque flux d'entrée (flusso&sinc0, flusso&sinc1,...) qui reçoit au niveau d'une entrée un signal de synchronisation de ligne (sync0, sync1, ...) du flux d'entrée respectif (flusso&sinc0, flusso&sinc1, ... et contrôle le port d'écriture (WR) du bloc de mémoire (RAM1, ..., RAM6) de canaux PCM entrants respectifs définissant l'adresse d'écriture correcte pour les données d'informations placées sur le bus d'écriture (DP) par le convertisseur série/parallèle (S/P) respectif en réponse à une impulsion de ladite séquence de validation d'octet (EnBx);

   ledit bloc de canaux PCM sortants (BP_GFU) comprend des moyens d'insertion desdites marques temporelles (M1, M2) dans un ou plusieurs bits d'un premier intervalle de temps (TSO) correspondant au premier canal PCM sortant du flux série de sortie pertinent.

2. Matrice de commutation selon la revendication 1, dans laquelle chacun desdits moyens de conversion parallèle/série (P/S) pour un flux de sortie respectif comprend :

un registre tampon (PL BUFFER) approprié pour stocker la donnée présente sur le bus de données de lecture de ladite mémoire vocale (RAM1, ..., RAM6) ;

un premier dispositif de sélection (SX) produisant un signal de validation dudit registre tampon (PL BUFFER) selon un débit binaire programmé ;

un convertisseur parallèle/Série (P/S) accouplé à la sortie dudit registre tampon (PL BUFFER) ;

un deuxième dispositif de sélection (MX) entré avec lesdits signaux de chronométrage (OENCKx) cohérents avec le débit binaire de flux de sortie et permettant la production de données mises en série du flux sortant, à la vitesse sélectionnée.

3. Matrice de commutation selon la revendication 1, **caractérisée en ce que** le bloc de canaux PCM entrants (BP_MFE) comprend un ou plusieurs circuits d'échantillonnage d'entrée bistables (B) en cascade et en un nombre qui est incrémenté de manière séquentielle pour chaque flux d'entrée, pour déplacer en phase lesdits flux série d'entrée entre eux et fournir un signal de synchronisation déplacé en phase (SYNCx) au compteur programmable respectif (COUNTERx).

4. Matrice de commutation selon la revendication 1, **caractérisée en ce qu'**un scanner pour des phases sortantes (SFU) constitué d'un compteur approprié à lire en continu en séquence des cellules de la mémoire de commande pour composer les différents flux de sortie de canaux PCM de la matrice de commutation est associé à un port de lecture (RD) de ladite mémoire de commande (COMMAND_MEMORY), ledit compteur étant préréglé par ledit signal de synchronisation interne (IN-SYNC) et permis de compter en fonction du débit binaire de ladite horloge externe (CKF).

5. Matrice de commutation selon la revendication 1, **caractérisée en ce qu'**à un port d'écriture/de lecture (WR/RD) de ladite mémoire de commande (COMMAND_MEMORY) est accouplé un circuit comprenant :

un premier registre/compteur (F&CO) dans lequel le circuit d'interface (BIM) du microprocesseur ($\mu$P) écrit l'adresse de l'emplacement à écrire dans la mémoire de commande, le registre/compteur (F&CO) possédant une entrée recevant un code représentant le débit binaire d'un flux de sortie respectif et permettant au compteur de fonctionner à une certaine vitesse en fonction dudit débit binaire ;

un deuxième registre/compteur (F&CI) dans lequel le circuit d'interface du microprocesseur (BIM) écrit les informations à écrire dans l'emplacement identifié par les informations contenues dans ledit premier registre/compteur (F&CO), un tel deuxième registre/compteur (F&CI) possédant une entrée recevant une certaine instruction (ICA) pour la commutation des flux de données sur des canaux PCM adjacents, déterminant un incrément de son contenu ;

un circuit de comptage ($\Delta$C) dans lequel ledit circuit d'interface (BIM), en présence de ladite instruction (ICA), charge le nombre de canaux PCM impliqués par ladite commutation sur des canaux adjacents, la présence de tout nombre dans ledit circuit de comptage provoquant un décrément de son contenu et un incrément du contenu desdits premier et deuxième registres/compteurs (F&CO ; F&CI).

6. Matrice de commutation selon la revendication 1, **caractérisée en ce que** ledit microprocesseur de contrôle de connexion ($\mu$P) est programmé pour contrôler les opérations de commutation d'au moins un desdits flux à une vitesse qui est un multiple entier du débit binaire du flux.

7. Matrice de commutation selon la revendication 6, **caractérisée en ce que** ledit multiple entier est égal à 8.

8. Système de commutation PCM employant une pluralité de matrices de commutation élémentaires selon l'une quelconque des revendications 1 à 7, contrôlé par un microprocesseur de contrôle de connexion, chaque matrice élémentaire permettant la commutation de l'un quelconque parmi un nombre K de canaux de l'un quelconque des N flux d'entrée sur l'un quelconque desdits H canaux de l'un quelconque des M flux de sortie de matrice élémentaire, sous la supervision dudit microprocesseur de contrôle de connexion, **caractérisé en ce que** le débit binaire de chacun desdits N flux d'entrée et desdits M flux de sortie peut être programmé séparément et indépendamment.

Fig. 1

SYNC

CK F

BUFFERS

CkF
EnCk&BF
EnCk&BF/2
EnCk&BF/4 } to B2
EnCk&BF/8
EnCk&BF/16

IN_SYNC
CkF
EnBF
EnBF/2
EnBF/4
EnBF/8
EnBF/16

OENCKF
OENCKF/2
OENCHF/4
OENCKF/8
OENCKF/16

ERT0
.......
ERT24

} to B3

M.T. 1

D

SS

SR

M1

M.T. 2

D

SS

SR

M2

IN-SYNC

# Fig. 2

# Fig. 3

Fig. 4

Fig. 5

Fig. 6

**Fig. 7**

addRD 12-:-0

C 3

F-C

DI DO | DI DO

COMMAND

port A | port B

MEMORY

E_CCM

ENuP | EN port A | EN port B

WR/RD | RD

9 | C 2 | 9

F-C

16

C 1

12 | F-C | 12

DEC SYNC (32) | IN-SYNC

F-C

CKF

ΔC | F&CI | F&CO | SFU

PL | SYNC

3

32

F-C

SYNC alarm

C3 alarm | C2 alarm | C1 alarm | CGCM alarm | F&CI control | F&CO control | ΔC | F&CI | F&CO | LOAD | PFU | ISTR | SYNC alarm

BIM

# Fig. 8

Fig. 9

Fig. 10

Fig. 11

# Fig. 12

Fig. 13

EP 0 769 886 B1

# Fig. 14

STATE_MACHINE

B1

RST
SW

B3

LOAD
ISTR
F—C    ENUP    E—CCM    CTR

3

OPCOD
DECODER

OP
COD    MATCH    ISTR
COND    NEW

10    10    1    1    1

B2

PRG
REG    EnBXe

B3

PRG
REG    EnBXu    FCO
PFU    FCI    ΔC    FCO
PFU
FCI
control    ALLc1
ALLc2
ALLc3

B4

Phase—Rd    Δ Phase
CMPL    ΔPh
E_ΔP    ADDΔPh

B5

Ccts0
Cci—o
NEXTECCwr

3 x 24    24    4 x 24    24    15    15    9    29    3    3    15    1    3

INTERNAL REGISTERS

12    4    1

WR & RD LOGIC

DATA_MP(15:0)

ADD_MP(3:0)    CS    DS    RW    IACK    DTACK    IREQ    A(2:0)    S(2:0)

30

Fig. 15